**Europäisches Patentamt**

**European Patent Office**

**Office européen des brevets**

(19)

(11) Veröffentlichungsnummer: **0 146 149**

**B1**

(12) # EUROPÄISCHE PATENTSCHRIFT

(45) Veröffentlichungstag der Patentschrift:
02.09.87

(21) Anmeldenummer: 84201096.9

(22) Anmeldetag: 26.07.84

(51) Int. Cl.⁴: **B 23 Q 35/10,** B 23 B 29/24, B 23 Q 1/08

(54) Zusatzapparat zur Hochpräzisen Bearbeitung einer Mantelfläche und einer daran angrenzenden, einen definierten Kurvenverlauf aufweisenden Schulter an einem Werkstück.

(30) Priorität: 08.08.83 CH 4306/83

(43) Veröffentlichungstag der Anmeldung:
26.06.85 Patentblatt 85/26

(45) Bekanntmachung des Hinweises auf die Patenterteilung:
02.09.87 Patentblatt 87/36

(84) Benannte Vertragsstaaten:
AT BE CH DE FR GB IT LI LU NL SE

(56) Entgegenhaltungen:
EP-A-0 065 993
DE-A-2 728 384
JP-A-58 004 342
JP-A-58 022 601
US-A-3 688 500
US-A-3 813 969
US-A-3 816 996
US-A-3 888 146
US-A-4 004 377

(73) Patentinhaber: Kummer Frères SA, Fabrique de machines, Rue de la Promenade 26, CH- 2720 Tramelan (CH)

(72) Erfinder: Kummer, Francis, Rue du 26- mars 50, CH- 2720 Tramelan (CH)
Erfinder: Leiber, Hans- Jürgen, Chemin des Grillons 7, CH- 2720 Tramelan (CH)

(74) Vertreter: Tschudi, Lorenz, Bovard AG Patentanwälte VSP Optingenstrasse 16, CH- 3000 Bern 25 (CH)

EP 0 146 149 B1

## Beschreibung

Die Erfindung betrifft einen Bearbeitungszusatzapparat zur Anbringung auf einem Kreuzschlitten einer Drehmaschine mit gegen Drehung blockierbarer Werkstücktragspindel und zugehörigem Spannfutter zwecks hochpräziser spanabhebender Bearbeitung einer Mantelfläche und einer daran angrenzenden, einen definierten Kurvenverlauf aufweisenden Schulter an einem Werkstück, mit einem in einem Gehäuse drehbar gelagerten Rotor, der mit Drehantriebsmitteln in Wirkverbindung steht und mit Mitteln zum Tragen von mindestens einem an seiner freistehenden Stirnseite angeordneten Werkzeug ausgerüstet ist, ferner mit einer Tastrolle, welche durch Andrückmittel an einer ringförmigen, hinter dem Rotor in einem geschlossenen Raum des Gehäuses feststehend angeordneten, den Kurvenverlauf der Schulter bestimmenden Steuerkurvenfläche in Anlage gehalten ist.

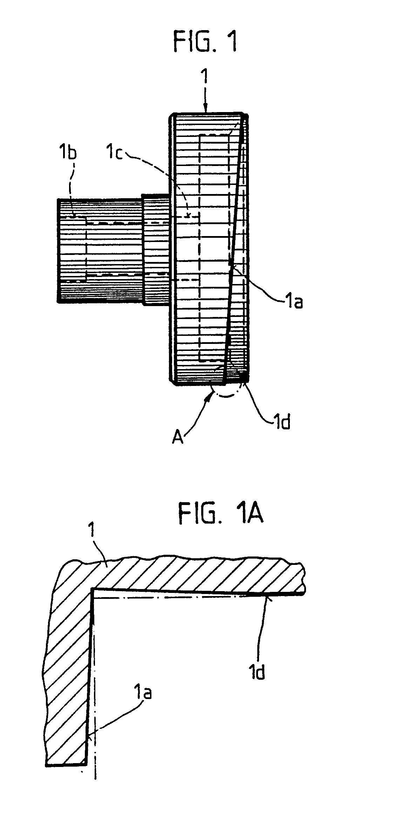

Solche Werkstücke sind zum Beispiel Bandtrommeln für Videogeräte. Eine solche Bandtrommel ist in Fig. 1 im Aufriss vereinfacht dargestellt und mit 1 bezeichnet; Fig. 1A ist ein Teilradialschnitt im Bereich A der Fig. 1, in stark vergrössertem Maßstab.

Schon seit Jahren wird bei der Anmeldefirma ein Zusatzapparat gefertigt, mit welchem solche Werkstücke bearbeitet werden.

Bei diesem Apparat werden die zum Bearbeiten der besagten Schulter (1a, Fig. 1 und 1A) notwendigen Längsbewegungen seines werkzeugtragenden Schlittens durch eine, an der Werkstücktragspindel konzentrisch aufgebauten, nicht eingekapselten Glockenkurve gesteuert. Für die bisherigen Anforderungen an die Mass- und Formgenauigkeit der zu fertigenden Werkstücke hat dieser Zusatzapparat zufriedenstellend gearbeitet.

In Zukunft werden aber an die erwähnten Werkstücke, speziell Bandtrommeln für Videogeräte, wesentlich höhere Anforderungen an die Mass- und Formgenauigkeit sowie der Oberflächengüte gestellt. Die tolerierten Abweichungen des Durchmessers und der Konzentrizität der Bohrungsabschnitte 1b und 1c und der an die Schulter 1a angrenzenden Mantelfläche 1d, und auch des Verlaufes der Schulter 1a, von den Nennmassen, liegen in der Grössenordnung weniger Tausendstellsmillimeter. Mit diesen neuen und extremen Qualitätsanforderungen sind aber die Grenzen der Leistungsfähigkeit des heutigen Zusatzapparates überschritten.

Nachteilig auf die Oberflächengüte der zu fertigenden Werkstücke wirkt sich z. B. der Umstand aus, dass die für die oszillierenden Bewegungen des werkzeugtragenden Schlittens notwendigen Kräfte von der Lagerung der Werkstücktragspindel aufgenommen werden müssen. Im weiteren befinden sich die Glockenkurve und die mit ihr in Wirkverbindung stehende Tastrolle direkt im Arbeitsraum, was Probleme der Sauberhaltung, der optimalen Schmierung und des Verschliesses mit sich bringt. Schon ein geringer Verschleiss dieser beiden Teile zwingt zur Nachbearbeitung derselben, da sonst die zulässigen Formtoleranzen der Schulter 1a überschritten werden.

Hier will die Erfindung Abhilfe schaffen. Sie geht aus von einem Bearbeitungszusatzapparat der eingangs erwähnten Gattung.

Ein Bearbeitungszusatzapparat dieser Art ist aus der DE-A- 27 28 384 bekannt geworden. Dieser bekannte Bearbeitungszusatzapparat dient zur spanabhebenden Bearbeitung von Stutzen an Grossbehältern, z. B. an Druckkesseln, Reaktoren, Vakuumkammern etc. Die Anforderung an die Genauigkeit solcher Bearbeitungen ist selbstverständlich um Zehnerpotenzen geringer als jene, die an den Gegenstand der vorliegenden Erfindung gestellt werden. Aus vielen Gründen könnte der bekannte Zusatzapparat diesen Anforderungen nicht genügen. Einer dieser Gründe besteht darin, dass zur Drehlagerung des Rotors lediglich zwei Axialkugellager vorgesehen sind, an den beiden Enden des Rotors. Die auf das oder die Werkzeuge vom Werkstück her ausgeübten Reaktionskräfte werden somit eine geringe Schiefstellung des Rotors bewirken. Eine weitere Fehlerquelle liegt bei diesem bekannten Zusatzapparat darin, dass die Werkzeuge nicht am Rotor selbst in Axialrichtung unverrückbar gehaltert sind, sondern an einem scheibenförmigen Träger, an dem Führungsstössel befestigt sind, die mittels Kugelführungen in exzentrischen Längsbohrungen des Rotors geführt sind. Dabei sind die zwei Führungsstössel je mit einer Tastrolle ausgerüstet, die mit der Steuerkurvenfläche in Anlage gehalten wird, sowie mit einer zweiten Tastrolle, die mit einer enkgegengesetzten eleastischen Hilfssteuerfläche in Anlage steht, welche die ersterwähnte Tastrolle mit der profilbestimmenden Steuerkurvenfläche in Anlage hält. Diese Ausbildungseigenart ist nicht nur eine potentielle Fehlerquelle, sondern auch baulich schwerfällig und kostspielig; sie erfordert viel Raum und viel Unterhalt.

Ausgehend von einer Ausbildung der vorerwähnten Art beseitigt die Erfindung die Nachteile der bekannten Ausführung durch eine Ausbildung, die im kennzeichnenden Teil des Patentanspruches 1 umschrieben ist.

Dieser hat den folgenden Wortlaut: "dadurch gekennzeichnet, dass das Gehäuse als Lagergehäuse eine Lagerbohrung zur Aufnahme des Rotors bildet, wobei der geschlossene Raum durch die Lagerbohrung, den sich in der Lagerbohrung befindlichen Rotor sowie einen an der hinteren Stirnseite des Gehäuses befestigten, den geschlossenen Raum hinten begrenzenden Abschlussdeckel gebildet ist, und wobei ein Grundkörper zur Halterung des Lagergehäuses an einer Drehmaschine vorhanden ist, wodurch die Achse des Rotors zur Achse einer Werkstücktragspindel fluchtend ausgerichtet werden kann, und, dass der Rotor in der Lagerbohrung sowohl dreh- als auch längsbeweglich gelagert ist, wobei sowohl die Tastrolle wie auch das oder die Werkzeuge in Axialrichtung unverrückbar an ihm gehalten sind."

Inbezug auf weitere Besonderheiten einer bevorzugten Ausführungsform des Erfindungsgegenstandes wird auf die Ansprüche 2 bis 9 hingewiesen.

Die Erfindung wird nun anhand der Fig. 2 bis 4 der beiliegenden Zeichnung beispielsweise erläutert. Es zeigen:

Fig. 2 eine schematisierte Draufsicht eines Drehautomaten, der mit einem Ausführungsbeispiel des Erfindungsgegenstandes ausgerüstet ist,

Fig. 3 einen Längsschnitt dieses Zusatzapparates und

Fig. 4 eine Stirnansicht in Richtung des Pfeiles IV der Fig. 3.

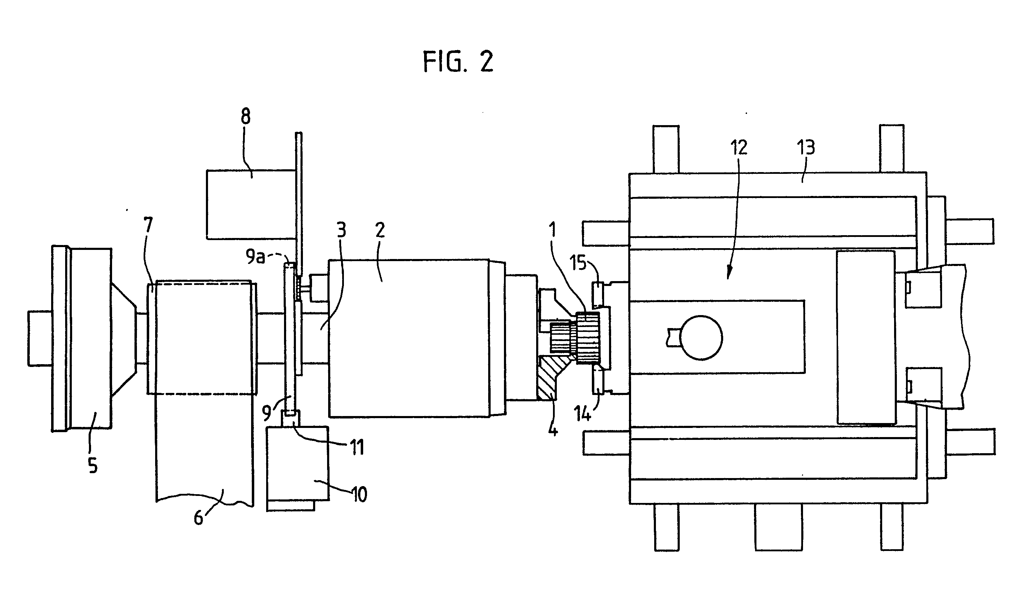

Der Drehautomat nach Fig. 2 hat einen Spindelstock 2, in dem eine Werkstücktragspindel 3 mit durch einen hydraulischen Spannzylinder 5 in und ausser Wirklage bringbarem Spannfutter 4 angeordnet ist. Der Drehantrieb dieser Werkstücktragspindel 3 erfolgt durch einen nichtgezeigten Elektromotor, der wahlweise sehr langsam oder bei regulierbaren hohen Drehzahlen laufen gelassen werden kann; dieser Motor ist durch ein Riemengetriebe mit Riemen 6 und mit auf der Werkstücktragspindel 3 sitzender Riemenscheibe 7 mit dieser Spindel antriebsverbunden. Mit dieser Spindel ist auch der Rotor eines Tourenzählers 8 antriebsverbunden, der als Drehzahlgeber für die Motorsteuerung wirkt. Auf der Werkstücktragspindel 3 sitzt ferner eine Scheibe 9 fest, die zwei genau diametral gegenüberliegende V-förmige Kerben 9a hat; ein stillstehendes Blockiergerät 10 hat einen Wirkteil 11, der bei sehr langsam laufender Werkstücktragspindel 3 mit der einen oder anderen der Kerben 9a in Eingriff gebracht werden kann, um die Werkstücktragspindel 3 in der einen oder anderen von zwei um genau 180° winkelversetzten Drehlagen blockieren zu können, zu Zwecken, die nachfolgend bei der Beschreibung der Wirkungsweise des Zusatzapparates erläutert werden.

Der den Erfindungsgegenstand bildende Zusatzapparat ist zusammenfassend mit 12 bezeichnet und sitzt auf einem Kreuzschlitten 13 des Drehautomaten fest, so dass er durch Bewegen dieses Kreuzschlittens in und ausser Wirklage gebracht werden kann und auch in einer ersten Phase der Benützung des Zusatzapparates, nämlich für das Einarbeiten der Mantelfläche 1d am Werkstück 1 für den axialen Vorschub des dann arbeitenden Werkzeuges 14 gebraucht werden kann, und zwar bei in der einen der beiden mittels des Blockiergerätes bestimmbaren Drehlagen festgehaltener Werkstücktragspindel 3. Vor dem Uebergang zur Bearbeitung der Schulter 1a am Werkstück 1 mit dem dem Werkzeug 14 diametral gegenüberliegenden Werkzeug 15 wird die Werkstücktragspindel mittels des oben erwähnten Motors um eine halbe Drehung gedreht und dann mittels des Blockiergerätes 10 wieder gegen Drehung blockiert. Die entsprechenden Funktionen des Motors und des Blockiergerätes 10 werden einhergehend mit solchen am Zusatzapparat 12 durch einen nicht gezeigten Steuerapparat gesteuert. Da die Steuerung verschiedenster Vorgänge an Drehautomaten durch derartige Steuergeräte bestens bekannt ist, erübrigt es sich, hier näher darauf einzugehen.

Der Zusatzapparat 12 hat einen auf dem Kreuzschlitten 13 befestigten Grundkörper 16, der zusammen mit daran angeschraubten Leisten 17 eine Geradführung für ein Lagergehäuse 18 bildet. Dieses hat eine Lagerbohrung für einen zusammenfassend mit 20 bezeichneten Rotor, welcher vorzugsweise in der Lagerbohrung hydrostatisch gelagert ist.. Hinten ist die Lagerbohrung durch einen angeschraubten Deckel 21 abgeschlossen, an dessen Aussenseite der Stator eines Elektromotors 22 angeschraubt ist. Mit der Welle 23 dieses Elektromotors 22 ist durch einen Keil 24 eine Keilwelle 25 drehfest verbunden, deren hinterer Teil fest mit einem Ring 26 verbunden ist, der am Abschlussdeckel 21 durch ein Schulterlager 27 abgestützt ist. In einem zwischen Lagergehäuse 18 und Abschlussdeckel 21 gebildeten Ringraum sitzt ein Ring 28 fest, der an seiner vorderen Seite die Kurvenfläche 29 hat, deren Profil ein genaues Abbild des Profiles der am Werkstück 1 zu erzeugenden Schulter 1a ist.

Der Rotor 20 hat einen rohrförmigen Mantel 30, der z. B. aus gehärtetem Stahl bestehen kann; er hat ferner einen topfförmigen Rotorkörper 31, an dessen hinterem Endteil ein Ring 32 angeschraubt ist, an dessen innerem Umfang ein Kranz von achsparallelen Keilvorsprüngen 32a ausgebildet ist. Diese stehen mit Keilvorsprüngen 25a in Eingriff, derart, dass zwischen der Keilwelle 25 und dem Rotor 20 eine drehfeste Schiebeverbindung besteht. Ein Federabstützteil 33 ist in den vorderen Endteil der Keilwelle 25 fest eingeschraubt; er dient zur Abstützung einer Schraubenfeder 34, deren hinteres Ende auf den Rotorring 32 einwirkt. Dieser hat eine halbzylindrische Tasche, in welcher eine Rolle 35 hydrostatisch entlastet abgestützt ist, mittels welcher der Rotor 20 durch die Feder 34 an der Steuerkurvenfläche 29 des Ringes 28 in Anlage gehalten wird.

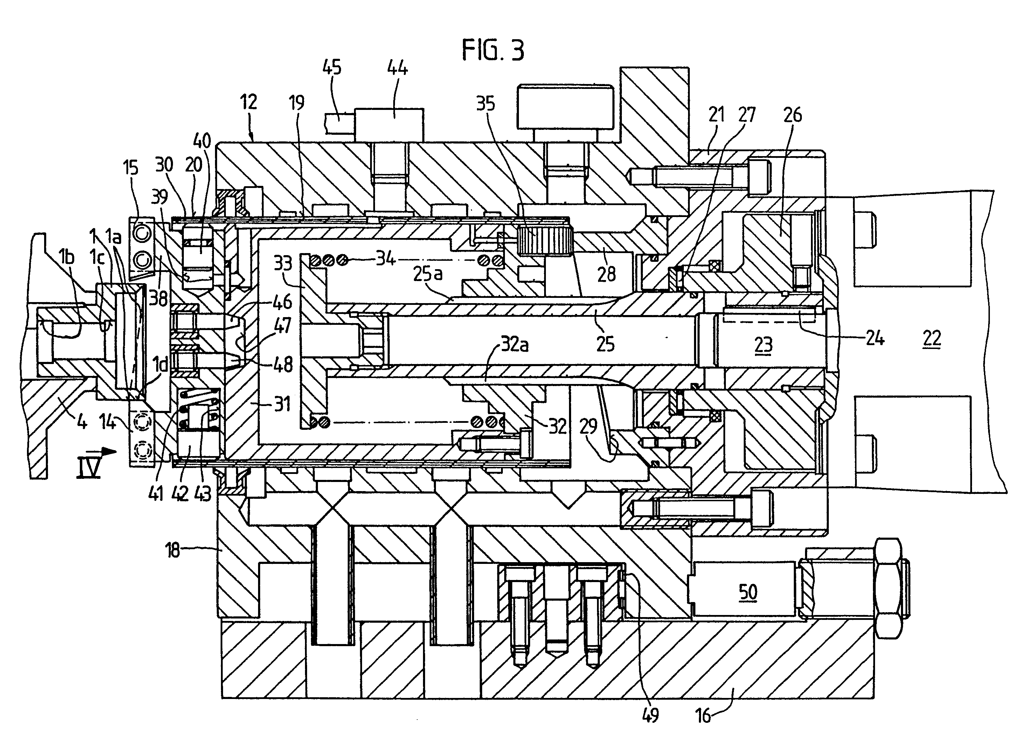

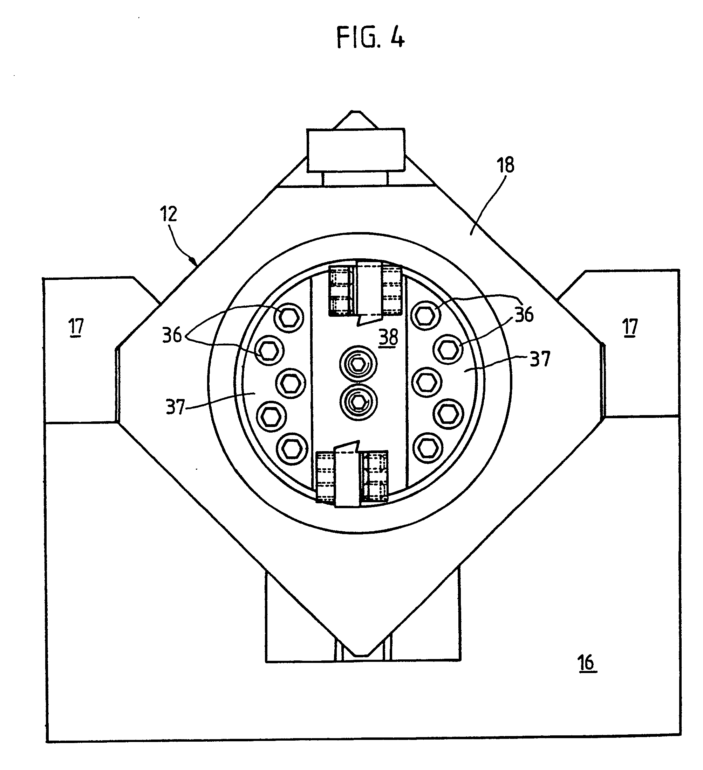

Am Boden des topfförmigen Rotorkörpers 31 sind durch Schrauben 36 (Fig. 4) zwei kreissegmentförmige Führungsleisten 37 befestigt, mittels welchen ein Schieber 38 am Rotorkörper 31 in dessen Diametralrichtung verschiebbar geführt ist. Dieser hat zwei etwa diametral gegenüberliegende Finger, an denen die Werkzeuge (Drehstichel) 14 und 15 angeschraubt sind. Die Verschiebung des Schiebers 38 erfolgt durch das weiter oben erwähnte Steuergerät auf hydraulische Weise durch einen in einer Bohrung 39 des Schiebers 38 wirkenden, sich am Rotormantel 30 abstützenden Kolben 40, und zwar entgegen dem Widerstand einer Feder 41, die samt einem Federkloben 42 in einer gegenüberliegenden Bohrung 43 des Schiebers 38 wirkt und sich mittels dieses Federklobens 42 am Rotormantel 30 abstützt. Die Bohrung 39 ist durch aus der Fig. 3 ersichtliche, in den Teilen 38, 31 und 18 ausgebildete Kanäle, einen am Lagergehäuse angeschraubten Verbindungsteil 44 und eine Druckleitung 45 mit dem vorerwähnten Steuergerät verbunden.

Der eben beschriebene Zusatzapparat arbeitet wie folgt, nachdem an dem im Futter 4 festgespannten Werkstück 1 namentlich die Bohrungsabschnitte 1b und 1c angefertigt worden sind und danach durch das Blockiergerät 10 die Werkstücktragspindel 3 gegen Drehung arretiert worden ist: der Elektromotor 22 wird in Tätigkeit gesetzt und es erfolgt dann mit Hilfe des Werkzeuges 14 die Bearbeitung der Mantelfläche 1d und zwar mit axialem Vorschub des ganzen Zusatzapparates unter Verwendung des Kreuzschlittens 13. Dabei nimmt der Schieber 38 die in Fig. 3 gezeigte Lage ein, weil voraussetzungsgemäss in der Bohrung 39 ein so geringer Druck herrscht, dass die Feder 41 die Anschlagschraube 46 an der zugehörigen Anschlagschulter am einen Ende der Ausfräsung 47 im Boden des Rotorkörpers 31 anlegt, wodurch der genaue Durchmesser der am Werkstück 1 erzeugten Mantelfläche 1d bestimmt ist. Hierbei wird auch bereits die Schulter 1a vorgefertigt, weil ja der Rotor 20 während seiner Drehung unter der Einwirkung der Feder 34 dem Profil der Kurvenfläche 29 folgt, also während jeder Drehung axial hin- und herbewegt wird. Sobald die Fertigung der Mantelfläche 1d beendet ist, muss das zur Endfertigung der Schulter 1a und des angrenzenden Bereiches der Mantelfläche 1d (vgl. Fig. 1A) dienende Werkzeug 15 zum Einsatz gebracht werden durch Erhöhung des Druckes der Flüssigkeit in der Bohrung 39 bis der Widerstand der Feder 41 überwunden ist und die Anschlagschraube 48 am zugehörigen Ende der Ausfräsung 47 anliegt. Einhergehend mit dieser Radialverschiebung des Schiebers 38 muss infolge des Überganges vom Gebrauch des Werkzeuges 14 zu demjenigen des diametral gegenüberliegenden Werkzeuges 15 die Werkstücktragspindel 3 samt dem Futter 4 und dem Werkstück 1 um eine halbe Drehung gedreht werden; hiezu wird, durch das oben erwähnte Steuergerät gesteuert, das Blockiergerät 10 vorübergehend ausser Wirkung gesetzt und der Antriebsmotor der Werkstücktragspindel 3 vorübergehend in Tätigkeit gesetzt, bis diese Spindel die halbe Drehung durchgeführt hat. Danach wird das Blockiergerät wieder aktiviert, um die Werkstückspindel wieder zu blockieren. Die Endfertigung der Schulter 1a und des angrenzenden Teiles der Mantelfläche 1d (Fig.

1A) erfolgt in einem einfachen Einstechvorgang durch Verschiebung des Schiebers 38 am Rotorkörper 31 bis die Anschlagschraube 48 zur Wirkung gelangt. Sobald dieser Fertigungsvorgang beendigt ist erfolgt durch Verminderung des Öldruckes in der Bohrung 39 ein Abheben des Werkzeuges 15 vom Werkstück 1, worauf durch entsprechende Bewegungen des Kreuzschlittens 13 der Zusatzapparat aus dem Bereich des Werkstückes heraus bewegt wird, damit anschliessend das fertig bearbeitete Werkstück aus dem Futter 4 freigegeben und in dieses ein weiteres Werkstück eingespannt werden kann.

Bei der beschriebenen Ausführung des Zusatzapparates wirken auf das Werkstück 1 und die Werkstücktragspindel 3 nur die Schnittkräfte; die Steuerkurve 29 und die mit ihr in Wirkverbindung stehende Tastrolle 35 arbeiten in einem sauberen Raum und können wirkungsvoll geschmiert werden. Diese Anordnung in Verbindung mit der hydrostatischen Lagerung des Rotors 20 garantiert an den gefertigten Werkstücken höchste Präzision und Oberflächengüte. Der erfindungsgemässe Zusatzapparat zeichnet sich aber noch durch eine weitere Besonderheit aus. Durch eine nicht ganz genau gefertigte Steuerkurve 29, durch ungleichmässige Abnützung einzelner Kurvenabschnitte sowie andere Einflüsse können Fehler an der Kontur der Schulter 1a des Werkstückes 1 auftreten. Um diese Fehler auszugleichen ist das Lagergehäuse 18 am Grundkörper 16 längsbeweglich geführt, wie schon erwähnt. Diese Bewegung in Längsrichtung wird zum Beispiel durch einen gegen ein Tellerfederpaket 49 wirkenden Piezoantrieb 50 bewirkt. Zur Steuerung dieser nur geringste Bruchteile von Millimetern betragende Längsbewegungen ist am hinteren Ende der Welle des Antriebsmotors 22 ein Impulsgeber angebaut. Mit diesem können über eine entsprechende Steuerung beliebigen, durch Programmieren festlegbaren Kurvenabschnitten die erforderlichen Korrekturwerte zugeordnet werden. Diese Korrekturwerte werden dann durch den Piezoantrieb 50 (oder ein anderes geeignetes Lagekorrekturglied) in die entsprechenden Längsbewegungen des Grundkörpers 16 samt Rotor 20 umgesetzt. Auf diese Weise ist es möglich, die Kontur der Schulter 1a des Werkstückes 1 in bisher unerreichter Genauigkeit herzustellen.

**Patentansprüche**

1. Bearbeitungszusatzapparat zur Anbringung auf einem Kreuzschlitten (13) einer Drehmaschine mit gegen Drehung blockierbarer Werkstücktragspindel und zugehörigem Spannfutter zwecks hochpräziser spanabhebender Bearbeitung einer Mantelfläche und einer daran angrenzenden, einen definierten Kurvenverlauf aufweisenden Schulter an einem Werkstück, mit einem in einem Gehäuse (18) drehbar gelagerten Rotor (20), der mit Drehantriebsmitteln (22) in Wirkverbindung steht und mit Mitteln (38) zum Tragen von mindestens einem an seiner freistehenden Stirnseite angeordneten Werkzeug (14, 15) ausgerüstet ist, ferner mit einer Tastrolle (35), welche durch Andrückmittel (34) an einer ringförmigen, hinter dem Rotor in einem geschlossenen Raum des Gehäuses feststehend angeordneten, den Kurvenverlauf der Schulter bestimmenden Steuerkurvenfläche (29) in Anlage gehalten ist, dadurch gekennzeichnet, dass das Gehäuse (18) als Lagergehäuse eine Lagerbohrung (19) zur Aufnahme des Rotors bildet, wobei der geschlossene Raum durch die Lagerbohrung (19), den sich in der Lagerbohrung befindlichen Rotor (20) sowie einen an der hinteren Stirnseite des Gehäuses befestigten, den geschlossenen Raum hinten begrenzenden Abschlussdeckel (21) gebildet ist, und wobei ein Grundkörper (16) zur Halterung des Lagergehäuses an einer Drehmaschine vorhanden ist, wodurch die Achse des Rotors (20) zur Achse einer Werkstücktragspindel fluchtend ausgerichtet werden kann, und, dass der Rotor (20) in der Lagerbohrung (19) sowohl dreh- als auch längsbeweglich gelagert ist, wobei sowohl die Tastrolle (35) wie auch das oder die Werkzeuge (14, 15) in Axialrichtung unverrückbar an ihm gehalten sind.

2. Bearbeitungszusatzapparat nach Anspruch 1, dadurch gekennzeichnet, dass die Steuerkurvenfläche an einem ringförmigen Teil (28) augebildet ist, dessen von dieser Fläche abgewendete Endpartie in einer Zentriervertiefung des Abschlussdeckels (21) gelegen und an letzterem festgesetzt ist.

3. Bearbeitungszusatzapparat nach Anspruch 1 oder 2, dadurch gekennzeichnet, dass der Rotor (20) an seiner freistehenden Stirnseite einen an einem Rotorkörper (31) in Diametralrichtung verschiebbar geführten Schieber (38) hat, der an seinen Endpartien zur Festhaltung je eines Werkzeuges (14, 15) ausgebildet ist und der servomotorisch wahlweise in zwei entgegengesetzte, vorzugsweise je durch eine Anschlagschraube (46, 48) bestimmte Arbeitslagen verstellbar ist, in denen das eine, bzw. das andere Werkzeug zur Wirkung gelangt.

4. Bearbeitungszusatzapparat nach Anspruch 3, dadurch gekennzeichnet, dass jede Endpartie des Schiebers (38) eine sich in besagter Diametralrichtung erstreckende Sackbohrung hat, wobei in der einen (39) dieser Sackbohrungen, welche durch eine im Schieber, im Rotorkörper und im Lagergehäuse vorhandene Kanalverbindung mit Steuermitteln in Verbindung steht, ein sich an einem rohrförmigen Mantel (30) des Rotors abstützender Servokolben (40) arbeitet, und in der anderen dieser Sackbohrungen eine am vorerwähnten Mantel abgestützte Feder (41) angeordnet ist, so dass der Schieber gegen die Kraft der Feder (41) nach Massgabe des Druckes der von den Steuermitteln zur ersterwähnten Sackbohrung zugeleiteten Flüssigkeit von der einen zur anderen Arbeitslage verschiebbar ist.

5. Bearbeitungszusatzapparat nach Anspruch 2, 3 oder 4, dadurch gekennzeichnet, dass die Drehantriebsmittel aus einem eigenen Elektromotor (22) bestehen, dessen Stator am Abschlussdeckel (21) angeschraubt ist, und auf dessen welle (23) eine Keilwelle (25) befestigt ist, welche den die Steuerkurvenfläche (29) besitzenden, ringförmigen Teil (28) und einen hinteren, die Tastrolle (35) tragenden Rotorendteil drehantriebsübertragend, aber frei längsverschieblich durchsetzt, wobei der Keilwelle ein Teil (33) angeschraubt ist, an dem sich das eine Ende einer schraubenlinienförmig gewundenen, die Andrückmittel bildenden Feder (34) abstützt, deren anderes Ende auf den Rotorendteil einwirkt.

6. Bearbeitungszusatzapparat nach einem der Ansprüche 1 bis 5, dadurch gekennzeichnet, dass das Lagergehäuse (18) in der Achsrichtung seiner Lagerbohrung in dem Grundkörper (16) beweglich geführt ist und durch Federmittel (49) an ein Lagekorrekturglied (50) angedrückt gehalten ist, das mit einer programmierbaren Steuerung verbunden ist.

7. Bearbeitungszusatzapparat nach Anspruch 6, dadurch gekennzeichnet, dass das Lagekorrekturglied ein Piezo-Antriebsglied ist.

8. Bearbeitungszusatzapparat nach einem der Ansprüche 1 bis 7, dadurch gekennzeichnet, dass die Tastrolle (35) in einer halbzylinderförmigen Lagertasche im Rotorkörper, hydrostatisch entlastet, gelagert ist.

9. Bearbeitungszusatzapparat nach einem der Ansprüche 1 bis 8, dadurch gekennzeichnet, dass der Rotor (20) in der Lagerbohrung (19) hydrostatisch gelagert ist.

## Claims

1. Machining accessory apparatus to be attached to the cross-slide (13) of a lathe having a work spindle lockable against rotation and associated chuck for the purpose of high-precision material-detaching machining of an outer surface and of an adjoining shoulder, having a specific pitch, on a workpiece, having a rotor (20) rotatably mounted in a housing (18) and operatively connected to rotational drive means (22) and equipped with means (38) for supporting at least one tool (14, 15) disposed on the exposed end face thereof, further having a feeler roller (35) held by pressing means (34) against an annular control curve surface (29) fixed behind the rotor in a closed space of the housing and determining the pitch of the shoulder, characterized in that the housing (18) as a bearing housing forms a bearing bore (19) for receiving the rotor, the closed spaced being formed by the bearing bore (19), the rotor (20) situated in the bearing bore, and a closure cover (21) fastened to the rearward end face of the housing and bounding the closed space at the rear, and there being a pedestal (16) for mounting the bearing housing on a lathe, whereby the axis of the rotor (20) can be oriented in alignment with the axis of a work spindle, and that the rotor (20) is mounted both rotatingly and longitudinally movably in the bearing bore (19), both the feeler roller (35) and the tool or tools (14, 15) being mounted axially immovably on the rotor.

2. Machining accessory apparatus according to claim 1, characterized in that the control curve surface is formed on an annular part (28), the end portion of which remote from this surface is situated in a centring depression of the closure cover (21) and is fixed thereto.

3. Machining accessory apparatus according to claim 1 or 2, characterized in that the rotor (20) has at its exposed end face a slide plate (38) guided slidably in radial direction, which slide plate is formed at each of its end portions for holding a tool (14, 15) and is selectively shiftable by servo means into two opposite operating positions, each preferably determined by a stop screw (46, 48), in which operating positions one or the other tool goes into action.

4. Machining accessory apparatus according to claim 3, characterized in that each end portion of the slide plate (38) has a blind bore extending in said radial direction, a servo-piston (40) braced against a tubular jacket (30) of the rotor operating in one (39) of these blind bores, which communicates with control means via a duct connection present in the slide plate, in the rotor body and in the bearing housing, and a spring (41) braced against the aforementioned jacket being disposed in the other of the blind bores, so that the slide plate is displaceable from one operating position to the other against the force of the spring (41) according to the pressure of the liquid supplied from the control means to the first-mentioned blind bore.

5. Machining accessory apparatus according to claim 2, 3, or 4, characterized in that the rotational drive means consist of a separate electric motor (22), the stator of which is screwed to the closure cover (21) and on the shaft (23) of which a key shaft (25) is fastened, which key shaft passes rotational-drive transmittingly, but longitudinally freely displaceably, through the annular part (38) having the control curve surface (29) and through a rear rotor end portion bearing the feeler roller (35), there being screwed onto the key shaft a part (33) against which one end of a helically wound spring (34) forming the pressing means is braced, the other end of which acts upon the rotor end portion.

6. Machining accessory apparatus according to one of the claims 1 to 5, characterized in that the bearing housing (18) is guided movably in the pedestal (16) in the axis direction of its bearing bore and is held pressed by spring means (49) against a position-correction member (50) which is connected to a programmable control.

7. Machining accessory apparatus according to claim 6, characterized in that the position-correction member is a piezoelectric drive member.

8. Machining accessory apparatus according to one of the claims 1 to 7, characterized in that the feeler roller (35) is mounted in a semicylindrical bearing pocket in the rotor body, hydrostatically balanced.

9. Machining accessory apparatus according to one of the claims 1 to 8, characterized in that the rotor (20) is hydrostatically mounted in the bearing bore (19).

**Revendications**

1. Dispositif auxiliaire pour le montage sur un chariot à croix (13) d'un tour avec broche porte-pièce et mandrin de serrage correspondant pouvant être bloquée en rotation, en vue de l'usinage de précision d'une surface cylindrique et d'un épaulement qui y est adjacent et présentant une courbe définie d'une pièce à usiner, avec un rotor (20) guidé en rotation dans un corps (18), qui est en liaison fonctionnelle avec des moyens d'entraînement en rotation (22) et est équipé de moyens (38) pour porter au moins un outil (14, 15) agencé sur sa face frontale libre, avec en outre un rouleau palpeur (35), qui est maintenu contre une surface courbe de commande (29), en forme d'anneau, agencée de manière fixe à l'arrière du rotor dans un espace formé du corps et déterminant l'allure de la courbe de l'épaulement grâce à des moyens de pression (34), caractérisé en ce que le corps (18), en tant que corps de palier, forme un alésage de roulement (19) pour recevoir le rotor, l'espace fermé étant formé par l'alésage du roulement (19), le rotor (20) se trouvant dans l'alésage de roulement, ainsi qu'un chapeau de fermeture (21) fixé sur la face frontale arrière du corps et limitant l'espace fermé à l'arrière, un corps de base (16) étant prévu pour le maintien du corps de palier à un tour, par lequel l'arbre du rotor (20) peut être aligné sur l'arbre d'une borche porte-pièce et en ce que le rotor (20) est guidé dans l'alésage de roulement (19) aussi bien en mouvement rotatif que longitudinal, le rouleau palpeur (35) tout comme le ou les outils (14, 15) étant retenus en appui contre lui dans le sens axial.

2. Dispositif auxiliaire selon la revendication 1, caractérisé en ce que la surface courbe de commande est formée dans une pièce en forme d'anneau (28), la partie extrême en regard de cette surface étant placée dans un renfoncement de centrage du chapeau de fermeture (21) et fixée à celui-ci.

3. Dispositif auxiliaire selon la revendication 1 ou 2, caractérisé en ce que le rotor (20) est pourvu à sa surface frontale libre d'un coulisseau (38) guidé contre un corps de rotor (31) dans un mouvement dans le sens diamétral, lequel coulisseau est formé à ses parties extrêmes pour la fixation chaque fois d'un outil (14, 15) et est réglable par servomoteur dans deux positions de travail opposées, déterminées de préférence au moyen à chaque fois d'une vis de butée (46, 48) au cours desquelles positions l'un ou l'autre des outils est en action.

4. Dispositif auxiliaire selon la revendication 3, caractérisé en ce que chaque partie extrême du coulisseau (38) présente un alésage borgne orienté dans ledit sens diamétral, où un piston asservi (40) s'appuyant sur une enveloppe en forme de tuyau (30) du rotor, travaille dans l'un (39) de ces alésages borgnes qui est en liaison avec des moyens de commande par un canal dans le coulisseau aménagé dans le corps du rotor et dans le corps de palier et où un ressort (41) s'appuyant sur l'enveloppe mentionnée plus haut est agencée dans l'autre de ces alésages borgnes de telle manière que le coulisseau peut se déplacer d'une position de travail vers l'autre contre la force du ressort (41) après la fourniture conforme de la pression du fluide acheminé depuis les moyens de commande aux alésages borgnes mentionnés.

5. Dispositif auxiliaire selon la revendication 2, 3 ou 4, caractérisé en ce que les moyens d'entraînement en rotation sont constitués d'un moteur électrique autonome (22) dont le stator est vissé au chapeau de fermeture (21), et sur l'arbre (23) duquel est fixé un arbre cannelé (25), lequel traverse de manière liée en rotation mais libre en translation la pièce en forme d'anneau (28) comprenant la surface courbe de commande (29) et la partie extrême du rotor portant le rouleau palpeur (35), une pièce (33) étant vissée à l'arbre cannelé sur laquelle s'appuie l'une des extrémités d'un ressort (34) allant en spirale et formant la pression, et dont l'autre extrémité agit sur la partie extrême du rotor.

6. Dispositif auxiliaire selon l'une des revendications 1 à 5, caractérisé en ce que le corps de palier (18) est guidé mobile dans le sens de l'axe de son alésage de roulement dans le corps de base (16) et maintenu en appui à un élément de correction de position (50) par des ressorts (49), ledit élément étant en liaison avec une commande programmable.

7. Dispositif auxiliaire selon la revendication 6, caractérisé en ce que l'élément de correction de position est un élément d'entrainement Piezo-électrique.

8. Dispositif auxiliaire selon l'une des revendications 1 à 7, caractérisé en ce que le rouleau palpeur (35) est guidé dans le corps de rotor dans une cuvette palier demi-cylindrique sans contrainte hydrostatique.

9. Dispositif auxiliaire selon l'une des revendications 1 à 8, caractérisé en ce que le rotor (20) est pourvu d'un guidage hydrostatique dans l'alésage de roulement (19).

## FIG. 1

1

1b    1c

1a

1d

A

## FIG. 1A

1

1d

1a

FIG. 2

0 146 149

FIG. 3

0 146 149

FIG. 4